(19) Europäisches Patentamt
European Patent Office
Office européen des brevets

(11) Veröffentlichungsnummer: **0 090 409**
**B1**

(12) # EUROPÄISCHE PATENTSCHRIFT

(45) Veröffentlichungstag der Patentschrift: **16.07.86**

(51) Int. Cl.⁴: **C 08 L 83/08**, C 08 K 5/56

(21) Anmeldenummer: **83103105.9**

(22) Anmeldetag: **29.03.83**

(54) **Unter Ausschluss von Wasser lagerfähige, bei Zutritt von Wasser bei Raumtemperatur zu Elastomeren vernetzende Massen.**

(30) Priorität: **31.03.82 DE 3212008**

(43) Veröffentlichungstag der Anmeldung: **05.10.83 Patentblatt 83/40**

(45) Bekanntmachung des Hinweises auf die Patenterteilung: **16.07.86 Patentblatt 86/29**

(84) Benannte Vertragsstaaten: **AT BE CH DE FR GB IT LI NL SE**

(56) Entgegenhaltungen:
**DD - A - 83 248**
**US - A - 4 102 860**

(73) Patentinhaber: **WACKER-CHEMIE GMBH, Prinzregentenstrasse 22, D-8000 München 22 (DE)**

(72) Erfinder: **Schiller, August, Dr., Göllstrasse 22, D-8262 Neuötting (DE)**
Erfinder: **Bosch, Erhard, Dr., Brucknerstrasse 43, D-8263 Burghausen (DE)**
Erfinder: **Dorsch, Norman, Fuchshausen 148 1/3, D-8263 Burghausen (DE)**
Erfinder: **Sommer, Oswin, Dr., Haydnstrasse 12, D-8263 Burghausen (DE)**

**EP 0 090 409 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Aus US 4 102 860 (ausgegeben 25. Juli 1978, E. Wohlfarth et al., Wacker-Chemie GmbH) sind bereits unter Ausschluss von Wasser lagerfähige, bei Zutritt von Wasser bei Raumtemperatur zu Elastomeren vernetzende Massen bekannt, die durch Vermischen von kondensationsfähige Endgruppen aufweisendem Diorganopolysiloxan mit mindestens drei hydrolysierbare Gruppen je Molekül aufweisender Siliciumverbindung, wobei es sich bei diesen hydrolysierbaren Gruppen auch um über Stickstoff an Silicium gebundene Aminogruppen oder über Sauerstoff an Silicium gebundene Oximgruppen handeln kann, und Umsetzungsprodukt von z.B. Di-n-butylzinndiacetat mit z.B. Tetraäthylsilikat, als wesentlichen Bestandteilen hergestellt worden sind. Die Umsetzungsprodukte aus Alkoxysilan und Zinnverbindung gemäss der oben genannten Patentschrift sind, soweit sie im einzelnen beschrieben werden, bei Raumtemperatur kristallin. Bei sämtlichen Umsetzungsprodukten aus Alkoxysilan und Zinnverbindung gemäss der oben genannten Patentschrift ist an das Zinnatom mindestens eine Acylatgruppe gebunden. Die Umsetzungsprodukte aus Alkoxysilan und Zinnverbindung gemäss der oben genannten Patentschrift dienen ebenso wie die erfindungsgemäss verwendeten Umsetzungsprodukte aus Silan und Zinnverbindung als Kondensationskatalysatoren.

Die Erfindung hat sich die Aufgabe gestellt, unter Ausschluss von Wasser lagerfähige, bei Zutritt von Wasser bei Raumtemperatur zu Elastomeren vernetzende Massen bereitzustellen, die durch Vermischen von kondensationsfähige Endgruppen aufweisendem Diorganopolysiloxan mit mindestens drei über Stickstoff an Silicium gebundene Aminogruppen oder über Sauerstoff an Silicium gebundene Oximgruppen oder insgesamt mindestens drei über Stickstoff an Silicium gebundene Aminogruppen und über Sauerstoff an Silicium gebundene Oximgruppen je Molekül aufweisender Siliciumverbindung und Kondensationskatalysator als wesentlichen Bestandteilen hergestellt worden sind, wobei der Kondensationskatalysator bei Raumtemperatur flüssig ist, so dass er leicht mit den übrigen Bestandteilen der Masse vermischt werden kann, ohne dass zur besseren Verteilung und Dosierung vom Kondensationskatalysator die Mitverwendung eines zur Schrumpfung der Elastomeren führenden Lösungsmittels erforderlich ist, und die Massen Elastomere ergeben, die bereits bei Beginn der Vernetzung gedehnt werden können, ohne dass sich Risse in der zunächst gebildeten Haut oder in dem unter dieser Haut vorhandenen, noch nicht vernetzten Teil der Masse bilden, die Massen weiterhin Elastomere ergeben, die besonders fest haften auf den Unterlagen, auf denen sie erzeugt wurden, und die Massen schliesslich Elastomere ergeben, die besonders beständig gegenüber der Einwirkung von Wasser, einschliesslich Luftfeuchtigkeit und Regen, Wärme und Ultraviolett- oder Infrarotstrahlen, einschliesslich Bestrahlung durch Sonne, sind. Diese Aufgabe wird durch die Erfindung gelöst.

Gegenstand der Erfindung sind unter Ausschluss von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei über Stickstoff an Silicium gebundene Aminogruppen oder über Sauerstoff an Silicium gebundene Oximgruppen oder insgesamt mindestens drei über Stickstoff an Silicium gebundene Aminogruppen und über Sauerstoff an Silicium gebundene Oximgruppen je Molekül aufweisender Siliciumverbindung und Umsetzungsprodukt von mindestens zwei über Sauerstoff an Silicium gebundene, gegebenenfalls durch Ethersauerstoff unterbrochene, einwertige Kohlenwasserstoffreste je Molekül als hydrolysierbare Gruppen aufweisendem Silan oder dessen Oligomer mit Diorganozinndiacylat als wesentlichen Stoffen hergestellt worden sind, dadurch gekennzeichnet, dass sie als Umsetzungsprodukt der vorstehend definierten Art solches enthalten, bei dem alle Valenzen der Zinnatome durch SnC-gebundene, einwertige organische Reste bzw. durch Sauerstoffatome der Gruppierung

$$\equiv SiOSn \equiv$$

abgesättigt sind.

Aus DD-A-83 248 waren bereits Umsetzungsprodukte aus Diorganozinndiacylat und Orthokieselsäureester, wobei in diesen Umsetzungsprodukten die Valenzen der Zinnatome durch SnC-gebundene, einwertige organische Reste bzw. durch Sauerstoffatome der Gruppierung

$$\equiv SiOSi \equiv$$

abgesättigt sind und die Verwendung dieser Umsetzungsprodukte in bei Raumtemperatur zu Organopolysiloxanelastomeren vernetzenden Massen bekannt. DD-A-83 248 erwähnt jedoch keine unter Ausschluss von Wasser lagerfähigen, bei Zutritt von Wasser bei Raumtemperatur zu Elastomeren vernetzenden Massen und die durch die weiter unten folgenden Vergleichsversuche $V_3$ und $V_4$ belegten Vorteile gegenüber US-A-4 102 860 waren DD-A-83 248 nicht zu entnehmen.

Als kondensationsfähige Endgruppen aufweisende Diorganopolysiloxane können auch bei der Bereitung der erfindungsgemässen Massen die gleichen kondensationsfähige Endgruppen aufweisenden Diorganopolysiloxane verwendet werden, die bisher zur Herstellung von unter Ausschluss von Wasser lagerfähigen, bei Zutritt von Wasser bei Raumtemperatur zu Elastomeren vernetzenden Massen durch Vermischen von kondensationsfähige Endgruppen aufweisendem Diorganopolysiloxan mit mindestens drei über Stickstoff an Silicium gebundene Aminogruppen oder über Sauerstoff an Silicium gebundene Oximgruppen oder insgesamt mindestens drei

über Stickstoff an Silicium gebundene Aminogruppen und über Sauerstoff an Silicium gebundene Oximgruppen je Molekül aufweisender Siliciumverbindung und gegebenenfalls mindestens einen weiteren Bestandteil verwendet werden konnten. Die bisher meist dafür verwendeten und auch bei der Herstellung der erfindungsgemässen Massen bevorzugt eingesetzten, kondensationsfähigen Endgruppen aufweisenden Diorganopolysiloxane können z.B. durch die Formel

$$HO(SiR_2O)_mSiR_2OH$$

wiedergegeben werden. In dieser Formel bedeutet R gleiche oder verschiedene, einwertige, SiC-gebundene organische Reste und m ist eine ganze Zahl im Wert von mindestens 10.

Innerhalb der bzw. entlang den Siloxanketten der oben angegebenen Formel können, was durch derartige Formeln üblicherweise nicht dargestellt wird, zusätzlich zu den Diorganosiloxaneinheiten ($SiR_2O$) noch andere Siloxaneinheiten vorliegen. Beispiele für solche anderen, meist jedoch lediglich als mehr oder weniger schwer vermeidbare Verunreinigungen vorliegende Siloxaneinheiten sind solche der Formeln $RSiO_{3/2}$, $R_3SiO_{1/2}$ und $SiO_{4/2}$, wobei R jeweils die oben dafür angegebene Bedeutung hat. Vorzugsweise beträgt die Menge an solchen anderen Siloxaneinheiten als Diorganosiloxaneinheiten jedoch insgesamt höchstens 5 Molprozent der in den kondensationsfähige Endgruppen aufweisenden Diorganopolysiloxanen vorliegenden Siloxaneinheiten. Die Hydroxylgruppen in der oben angegebenen Formel können, falls erwünscht, vollständig oder teilweise durch andere kondensationsfähige Gruppen, wie Alkoxyreste mit 1 bis 4 Kohlenstoffatomen je Rest, ersetzt sein.

Beispiele für Reste R sind insbesondere Kohlenwasserstoffreste mit 1 bis 18 Kohlenstoffatomen je Rest, wie lineare oder verzweigte Alkylreste, z.B. der Methyl-, Ethyl-, n-Propyl-, Isopropyl-, n-Butyl-, sec.-Butyl-, 2-Ethylhexyl-, n-Decyl- und n-Tetradecylrest und Octadecylreste; Cycloalkylreste, z.B. der Cyclohexylrest und Methylcyclohexylreste; lineare oder verzweigte Alkenylreste, z.B. der Vinyl-,Allyl- und Methallylrest; Arylreste, z.B. der Phenylrest; Alkarylreste, z.B. Tolylreste; und Aralkylreste, wie der beta-Phenylethylrest.

Weitere Beispiele für Reste R sind lineare oder verzweigte substituierte Kohlenwasserstoffreste, wie halogenierte Kohlenwasserstoffreste, z.B. der 3,3,3-Trifluorpropylrest und Chlorphenyl- sowie Bromphenylreste; und Cyanalkylreste, z.B. der beta-Cyanethylrest. Vorzugsweise sind, insbesondere wegen der leichteren Zugänglichkeit mindestens 80% der Anzahl der SiC-gebundenen organischen Reste in den kondensationsfähige Endgruppen aufweisenden Diorganopolysiloxanen und damit auch der Reste R in der oben angegebenen Formel der bevorzugten Art von kondensationsfähige Endgruppen aufweisendem Diorganopolysiloxan Methylreste.

Bei den kondensationsfähige Endgruppen aufweisenden Diorganopolysiloxanen kann es sich um Homo- oder Mischpolymerisate gleicher oder verschiedener Viskosität handeln. Es kann eine Art von kondensationsfähige Endgruppen aufweisendem Diorganopolysiloxan bei der Bereitung der erfindungsgemässen Massen verwendet werden. Es kann aber auch ein Gemisch aus mindestens zwei verschiedenen Arten von kondensationsfähige Endgruppen aufweisendem Diorganopolysiloxan bei der Bereitung der erfindungsgemässen Massen eingesetzt werden.

Die Viskosität der kondensationsfähige Endgruppen aufweisenden Diorganopolysiloxane beträgt vorzugsweise 1500 bis 500 000 mPa·s bei 25 °C.

Als mindestens drei über Stickstoff an Silicium gebundene Aminogruppen oder über Sauerstoff an Silicium gebundene Oximgruppen oder insgesamt mindestens drei über Stickstoff an Silicium gebundene Aminogruppen und über Sauerstoff an Silicium gebundene Oximgruppen je Molekül aufweisende Siliciumverbindungen können ebenfalls auch bei der Bereitung der erfindungsgemässen Massen die gleichen Siliciumverbindungen dieser Art verwendet werden, die auch bisher zur Herstellung von unter Ausschluss von Wasser lagerfähigen, bei Zutritt von Wasser bei Raumtemperatur zu Elastomeren vernetzenden Massen durch Vermischen von kondensationsfähige Endgruppen aufweisendem Diorganopolysiloxan mit mindestens drei über Stickstoff an Silicium gebundene Aminogruppen oder über Sauerstoff an Silicium gebundene Oximgruppen oder insgesamt mindestens drei über Stickstoff an Silicium gebundene Aminogruppen und über Sauerstoff an Silicium gebundene Oximgruppen je Molekül aufweisender Siliciumverbindung und gegebenenfalls mindestens einem weiteren Bestandteil verwendet werden konnten.

Beispiele für zur Herstellung erfindungsgemässer Massen verwendbare Siliciumverbindungen mit mindestens drei über Stickstoff an Silicium gebundenen Aminogruppen je Molekül sind somit Aminosilane der Formel

$$R_aSi(NR^1_2)_{4-a},$$

worin R die oben dafür angegebene Bedeutung hat, $R^1$ Wasserstoff oder ein einwertiger Kohlenwasserstoffrest und a 0 oder 1 ist, und deren höchstens 10 Siliciumatome je Molekül aufweisenden Teilhydrolysate. Die oben angegebenen Beispiele für Kohlenwasserstoffreste R gelten im vollen Umfang, mit Ausnahme des Vinylrests, auch für die Kohlenwasserstoffreste $R^1$. Vorzugsweise ist in jeder Aminogruppe ein $R^1$ Wasserstoff und das andere $R^1$ der n-Butyl-, sec.-Butyl- oder Cyclohexylrest. Einzelne Beispiele für derartige Siliciumverbindungen sind

Methyltris-(n-butylamino)-silan
Methyltris-(sec.-butylamino)-silan und
Methyltris-(cyclohexylamino)-silan.

Beispiele für zur Herstellung erfindungsgemässer Massen verwendbare Siliciumverbindungen mit mindestens drei über Sauerstoff an Silicium

gebundenen Oximgruppen je Molekül sind Oximsilane der Formel

$$R_aSi(ON=X)_{4-a},$$

worin R und a jeweils die oben dafür angegebene Bedeutung haben und X eine $R^1_2C$- Gruppe ($R^1$ hat die oben dafür angegebene Bedeutung mit der Massgabe, dass mindestens ein $R^1$ ein Kohlenwasserstoffrest ist) oder eine $R^2C$-Gruppe bedeutet ($R^2$ bedeutet einen zweiwertigen Kohlenwasserstoffrest, der mit dem anderen Kohlenstoffatom als den Kohlenstoffatomen von $R^2$ einen Ring bildet), und deren höchstens 10 Siliciumatome je Molekül aufweisenden Teilhydrolysate.

Einzelne Beispiele für zur Herstellung erfindungsgemässer Massen verwendbare Siliciumverbindungen mit mindestens drei über Sauerstoff an Silicium gebundenen Oximgruppen je Molekül sind

Methyltris-(methylethylketoxim)-silan
Methyltris-(acetonoxim)-silan und
Methyltris-(cyclohexanonoxim)-silan.

Beispiele für zur Herstellung erfindungsgemässer Massen verwendbare Siliciumverbindungen mit insgesamt mindestens drei über Stickstoff an Silicium gebundenen Aminogruppen und über Sauerstoff an Silicium gebundenen Oximgruppen je Molekül sind Silane der Formel

$$R_aSi(ON=X)_b(NR^1_2)_{4-a-b},$$

worin R, $R^1$, X und a jeweils die oben dafür angegebene Bedeutung haben und b 0, 1, 2 oder 3, durchschnittlich 0,1 bis 2,9 und die Summe aus a+b höchstens 3,9 ist, und deren höchstens 10 Siliciumatome je Molekül aufweisenden Teilhydrolysate.

Ein einzelnes Beispiel für eine zur Herstellung erfindungsgemässer Massen verwendbare Siliciumverbindung mit insgesamt mindestens drei über Stickstoff an Silicium gebundene Aminogruppen und über Sauerstoff an Silicium gebundenen Oximgruppen je Molekül ist

Methylbis-(methylethylketoxim)-cyclohexylaminosilan.

Es können selbstverständlich auch Gemische aus z.B.

Methyltris-(cyclohexylamino)-silan und Methyltris-(methylethylketoxim)-silan bei der Bereitung erfindungsgemässer Massen eingesetzt werden.

Bei der Herstellung der erfindungsgemässen Massen wird mindestens drei über Stickstoff an Silicium gebundene Aminogruppen oder über Sauerstoff an Silicium gebundene Oximgruppen oder insgesamt mindestens drei über Stickstoff an Silicium gebundene Aminogruppen und über Sauerstoff an Silicium gebundene Oximgruppen je Molekül aufweisende Siliciumverbindung vorzugsweise in Mengen von insgesamt mindestens 3 Grammäquivalent über Stickstoff an Silicium gebundener Aminogruppen und über Sauerstoff an Silicium gebundener Oximgruppen je Grammäquivalent kondensationsfähiger Gruppen im kondensationsfähige Gruppen aufweisenden Diorganopolysiloxan eingesetzt. In der Praxis sind dies häufig 0,2 bis 15 Gewichtsprozent, insbesondere 1 bis 8 Gewichtsprozent, jeweils bezogen auf das Gesamtgewicht aller Bestandteile der jeweiligen Masse.

Die mindestens zwei über Sauerstoff an Silicium gebundene, gegebenenfalls durch Ethersauerstoff unterbrochene, einwertige Kohlenwasserstoffreste je Molekül als hydrolysierbaren Gruppen aufweisenden Silane, die zur Herstellung der als Kondensationskatalysator dienenden Umsetzungsprodukte in den erfindungsgemässen Massen verwendet werden, können durch die Formel

$$R_cSi(OR^3)_{4-c}$$

wiedergegeben werden. In dieser Formel hat R die oben dafür angegebene Bedeutung, $R^3$ bedeutet gleiche oder verschiedene, einwertige, gegebenenfalls durch Ethersauerstoff unterbrochene Kohlenwasserstoffreste und c 0, 1 oder 2.

Unter den Oligomeren solcher Silane sind solche Verbindungen zu verstehen, die mindestens zwei und höchstens 10 durch Siloxansauerstoff miteinander verbundene Siliciumatome und durchschnittlich mindestens eine $R^3O$-Gruppe je Siliciumatom enthalten. Solche Oligomeren sind insbesondere durch Teilhydrolyse von Silanen der Formel

$$R_cSi(OR^3)_{4-c}$$

erhältlich.

Die Beispiele für Reste R, die oben in Verbindung mit den kondensationsfähige Endgruppen aufweisenden Diorganopolysiloxanen angegeben wurden, gelten im vollen Umfang auch für die Reste R in den Silanen der Formel

$$R_cSi(OR^3)_{4-c}.$$

Bevorzugt als Reste R in den Silanen bzw. als SiC-gebundene organische Reste in den Oligomeren dieser Silane sind jedoch Kohlenwasserstoffreste mit 1 bis 4 Kohlenstoffatomen je Rest, für die oben in Verbindung mit den kondensationsfähige Endgruppen aufweisenden Diorganopolysiloxanen ebenfalls Beispiele angegeben werden. Es sei dabei nur an den Methyl- oder Vinylrest erinnert.

Als Reste $R^3$ sind Alkylreste mit 1 bis 4 Kohlenstoffatomen bevorzugt, wie der Methyl-, Ethyl-, n-Propyl-, Isopropyl-, n-Butyl- und sec.-Butylrest oder ein Gemisch aus verschiedenen Resten dieser Art.

Ein Beispiel für einen durch Ethersauerstoff unterbrochenen Rest $R^3$ ist der Methoxyethylen-($CH_3OCH_2CH_2$)-Rest.

Einzelne Beispiele für Silane oder deren Oligomere, aus denen die Umsetzungsprodukte, die als Kondensationskatalysatoren in den erfindungsgemässen Massen dienen, durch Umsetzung mit

bestimmten Zinnverbindungen hergestellt werden können, sind Tetraethylsilikat, Vinyltriethoxysilan, Dimethyldiethoxysilan, Hexaethoxydisiloxan und Ethoxypolysiloxane mit einem $SiO_2$-Gehalt von 30 bis 45 Gewichtsprozent, wie sie z.B. unter der Bezeichnung «Äthylsilikat 40» oder «Ethylsilikat 40» im Handel erhältlich sind.

Es kann eine Art von Silan oder dessen Oligomer bei der Herstellung der Umsetzungsprodukte durch Umsetzung mit Zinnverbindung eingesetzt werden. Es kann aber auch ein Gemisch aus mindestens zwei verschiedenen Siliciumverbindungen dieser Art bei der Herstellung der Umsetzungsprodukte durch Umsetzung mit Zinnverbindung eingesetzt werden, z.B. ein Gemisch aus Tetraethylsilikat und Hexaethoxydisiloxan.

Diorganozinndiacylate können durch die Formel

$$R^4_2Sn(OCOR^5)_2$$

wiedergegeben werden. In dieser Formel bedeutet $R^4$ gleiche oder verschiedene, einwertige SnC-gebundene organische Reste und $R^5$ gleiche oder verschiedene, einwertige, gegebenenfalls substituierte Kohlenwasserstoffreste.

Auch die Reste $R^4$ weisen vorzugsweise 1 bis 18 Kohlenstoffatome je Rest auf und die Beispiele für Reste R, die oben in Verbindung mit den kondensationsfähige Endgruppen aufweisenden Diorganopolysiloxanen angegeben wurden, gelten im vollen Umfang auch für die Reste $R^4$. Bevorzugt als Reste $R^4$ sind der Methyl-, n-Butyl-, n-Octyl- und 2-Ethylhexylrest. Es ist bevorzugt, dass die Reste $R^4$ gleich sind, also dass beide Reste $R^4$ z.B. n-Butylreste sind.

Die Reste $R^5$ sind vorzugsweise Alkylreste mit 1 bis 4 Kohlenstoffatomen und die Beispiele für Reste $R^3$ gelten im vollen Umfang auch für die Reste $R^5$. Bevorzugt als Reste $R^5$ ist der Methylrest, weil dann die als Nebenprodukte bei der Herstellung der Umsetzungsprodukte aus Siliciumverbindung und Zinnverbindung entstandenen Ester besonders leicht durch Destillation entfernt werden können. Weiterhin ist bevorzugt, dass beide Reste $R^5$ gleich sind, also dass beide Reste $R^5$ z.B. Methylreste sind.

Einzelne Beispiele für Diorganozinndiacylate, die bei der Herstellung der Umsetzungsprodukte aus Zinnverbindung und Silan oder dessen Oligomer bevorzugt sind, sind

Di-n-butylzinndiacetat und
Di-2-ethylhexylzinndiacetat.

Es kann eine Art von Diorganozinndiacylat bei der Herstellung der Umsetzungsprodukte durch Umsetzung mit Siliciumverbindung verwendet werden. Es kann aber auch ein Gemisch aus mindestens zwei verschiedenen Zinnverbindungen dieser Art bei der Herstellung der Umsetzungsprodukte durch Umsetzung mit Siliciumverbindung verwendet werden.

Damit in den Umsetzungsprodukten von mindestens zwei über Sauerstoff an Silicium gebundene, gegebenenfalls durch Ethersauerstoff unterbrochene, einwertige Kohlenwasserstoffreste je Molekül als hydrolysierbare Gruppen aufweisendem Silan oder dessen Oligomer mit Diorganozinndiacylat alle Valenzen der Zinnatome durch SnC-gebundene, einwertige Reste bzw. durch Sauerstoffatome der Gruppierung

$$\equiv SiOSn \equiv$$

abgesättigt sind, muss bei der Herstellung dieser Umsetzungsprodukte mindestens 1 Grammäquivalent $-OR^3$ je Grammäquivalent $R^5OCO$-Gruppen verwendet werden. Vorzugsweise werden 4 bis 25 Grammäquivalent $R^3O$-Gruppen je Mol Diorganozinndiacylat eingesetzt.

Die Umsetzung von mindestens zwei über Sauerstoff an Silicium gebundene, gegebenenfalls durch Ethersauerstoff unterbrochene, einwertige Kohlenwasserstoffreste je Molekül als hydrolysierbare Gruppen aufweisendem Silan oder dessen Oligomer mit Diorganozinndiacylat wird vorzugsweise durch 15 Minuten bis 15 Stunden währendes Erwärmen des Gemisches der Reaktionsteilnehmer auf 15 bis 200 °C durchgeführt. Dieses Erwärmen wird vorzugsweise beim Druck der umgebenden Atmosphäre, also bei etwa 1 bar, oder bei geringerem Druck durchgeführt. Eine derartige Herstellung solcher Umsetzungsprodukte ist aus US 3 186 963, J.L. Lewis et al., Midland Silicones Limited, ausgegeben 1. Juni 1965, bekannt. Gemäss dieser Druckschrift werden die Umsetzungsprodukte jedoch als Kondensationskatalysatoren in sogenannten Zwei-Komponentensystemen verwendet.

Bei der Herstellung der Umsetzungsprodukte von Siliciumverbindung mit Diorganozinndiacylat, die zu den wesentlichen Bestandteilen der erfindungsgemässen Massen gehören, werden die dabei als Nebenprodukte gebildeten Ester vorzugsweise abdestilliert, um die Schrumpfung der aus den Massen gebildeten Elastomeren zu verringern.

Den Umsetzungsprodukten aus Siliciumverbindung und Diorganozinndiacylat wird, wenn als Siliciumverbindung ein Silan und kein Oligomer des Silans verwendet wurde, die Formel

$$R_cSi(OR^3)_{3-c}(OSnR^4_2)_d\left[OR_cSi(OR^3)_{2-c}OSnR^4_2\right]_nOSiR_c(OR^3)_{3-c}$$

zugeschrieben, wobei R, $R^3$, $R^4$ und c jeweils die oben dafür angegebene Bedeutung haben, d 0 oder 1 und n 0 oder mindestens 1 ist.

Vorzugsweise enthalten die erfindungsgemässen Massen Umsetzungsprodukt von mindestens zwei über Sauerstoff an Silicium gebundene, gegebenenfalls durch Ethersauerstoff unterbrochene, einwertige Kohlenwasserstoffreste je Molekül als hydrolysierbare Gruppen aufweisendem Silan oder dessen Oligomer mit Diorganozinndiacylat in Mengen von 0,01 bis 5 Gewichtsprozent, insbesondere 0,1 bis 1 Gewichtsprozent, jeweils bezogen auf das Gesamtgewicht aller Bestandteile der jeweiligen Masse.

Zusätzlich zu den wesentlichen Stoffen, die bei der Bereitung der erfindungsgemässen Massen eingesetzt werden, nämlich kondensationsfähige Endgruppen aufweisendem Diorganopolysiloxan, mindestens drei über Stickstoff an Silicium gebundene Aminogruppen oder über Sauerstoff an Silicium gebundene Oximgruppen oder insgesamt mindestens drei über Stickstoff an Silicium gebundene Aminogruppen und über Sauerstoff an Silicium gebundene Oximgruppen je Molekül aufweisende Siliciumverbindung und Umsetzungsprodukt von mindestens zwei über Sauerstoff an Silicium gebundene, gegebenenfalls durch Ethersauerstoff unterbrochene, einwertige Kohlenwasserstoffreste je Molekül als hydrolysierbare Gruppen aufweisendem Silan oder dessen Oligomer mit Diorganozinndiacylat, können bei der Bereitung der erfindungsgemässen Massen weitere Stoffe mitverwendet werden. So ist es bevorzugt, dass die erfindungsgemässen Massen zusätzlich zu den vorstehend genannten Stoffen Mittel zur Verbesserung der Haftung der aus den Massen hergestellten Elastomeren auf Unterlagen, auf denen die Elastomeren erzeugt wurden, enthalten. Unter derartigen Mitteln sind Organosilane mit mindestens einer über Kohlenstoff an Silicium gebundenen Aminogruppe, wie sie in US 3 678 003, ausgegeben am 18. Juli 1972, W. Kaiser et al., Wacker-Chemie GmbH beschrieben sind, und Organosiloxane mit mindestens einer über Kohlenstoff an Silicium gebundenen Aminogruppe, wie sie in US 4 191 817, ausgegeben 4. März 1980, A. Schiller et al., Wacker-Chemie GmbH, beschrieben sind, bevorzugt.

Weitere Beispiele für Stoffe, die in den erfindungsgemässen Massen zusätzlich enthalten sein können, sind verstärkende anorganische Füllstoffe, die hydrophil oder hydrophob sein können, nicht-verstärkende anorganische Füllstoffe, die hydrophil oder hydrophob sein können, Pigmente, lösliche Farbstoffe, Riechstoffe, Weichmacher, z.B. bei Raumtemperatur flüssige, durch Trimethylsiloxygruppen endblockierte Dimethylpolysiloxane oder Phosphorsäureester, Fungicide, harzartige Organopolysiloxane, einschliesslich solcher aus $(CH_3)_3SiO_{1/2}$- und $SiO_{4/2}$-Einheiten, rein-organische Harze, wie Homo- oder Mischpolymerisate des Acrylnitrils, Polystyrol, Polyvinylchlorid oder Polypropylen, wobei solche rein-organischen Harze, insbesondere Mischpolymerisate aus Styrol und n-Butylacrylat, bereits in Gegenwart vom kondensationsfähige Endgruppen aufweisenden Diorganopolysiloxan durch Polymerisation der genannten Monomeren mittels freier Radikale erzeugt worden sein können, Korrosionsinhibitoren, Polyglykole, die verestert oder verethert sein können, Oxydationsinhibitoren, Hitzestabilisatoren, Lösungsmittel, Mittel zur Beeinflussung der elektrischen Eigenschaften, wie leitfähiger Russ, flammabweisend machende Mittel, Lichtschutzmittel und Mittel zur Verlängerung der Hautbildungszeit, wie Silane mit einem SiC-gebundenen Mercaptoalkylrest.

Zur Bereitung der erfindungemässen Massen können alle Bestandteile der jeweiligen Masse in beliebiger Reihenfolge miteinander vermischt werden. Dieses Vermischen erfolgt vorzugsweise bei Raumtemperatur und vorzugsweise wird bei diesem Vermischen der Zutritt von Wasser vermieden. Falls erwünscht, kann dieses Vermischen aber auch bei höheren Temperaturen erfolgen, z.B. bei einer Temperatur im Bereich von 35 bis 135 °C.

Für die Vernetzung der erfindungsgemässen Massen reicht der übliche Wassergehalt der Luft aus. Die Vernetzung kann, falls erwünscht, auch bei höheren Temperaturen als Raumtemperatur oder niedrigeren Temperaturen als Raumtemperatur, z.B. bei −5 bis 10 °C, durchgeführt werden. Ebenso kann die Vernetzung auch bei Konzentrationen von Wasser durchgeführt werden, die den normalen Wassergehalt der Luft übersteigen.

Die erfindungsgemässen Massen eignen sich ausgezeichnet als Abdichtungsmassen für Fugen, einschliesslich senkrecht verlaufender Fugen und ähnliche Leerräume mit lichten Weiten von z.B. 10 bis 40 mm, beispielsweise von Gebäuden, Land-, Wasser- und Luftfahrzeugen oder als Klebstoffe und Verkittungsmassen, z.B. im Fensterbau oder bei der Herstellung von Aquarien oder Vitrinen, sowie z.B. zur Herstellung von Schutzüberzügen, einschlisslich solchen für der ständigen Einwirkung von Süsswasser oder Meerwasser ausgesetzten Oberflächen, oder das Gleiten verhindernden Überzügen oder zur Herstellung von Schichtstoffen oder für andere Anwendungen, bei denen die bisher bekannten, bei Raumtemperatur zu Elastomeren vernetzenden Massen eingesetzt werden konnten, wie die Isolierung von elektrischen oder elektronischen Vorrichtungen oder die Herstellung von gummielastischen Formkörpern.

In den folgenden Beschreibungen der Herstellung von Umsetzungsprodukten aus Tetraalkoxysilan und Diorganozinndiacylat und den Beispielen beziehen sich alle Angaben von Teilen und Prozentsätzen auf das Gewicht, soweit nichts anderes angegeben ist.

Die in den folgenden Beispielen verwendeten Umsetzungsprodukte aus Tetraalkoxysilan und Diorganozinndiacylat wurden hergestellt wie folgt:

a) Ein Gemisch aus 4 Teilen Tetra-n-propoxysilan und 1 Teil Di-n-butylzinndiacetat wird unter Rühren 6 Stunden auf 120 °C beim Druck der umgebenden Atmosphäre erwärmt. Gleichzeitig wird der entstandene Essigsäurepropylester stetig abdestilliert. Danach ist gemäss dem IR-Spektrum die Valenzschwingung der Carboxylgruppe von Di-n-butylzinndiacetat, die bei 1600 $cm^{-1}$ liegt, verschwunden.

b) Die vorstehend unter a) beschriebene Arbeitsweise wird wiederholt mit den Abänderungen, dass 2 Teile Tetraethylsilikat anstelle von 4 Teilen Tetra-n-propylsilikat eingesetzt und Essigsäureethylester anstelle von Essigsäurepropylester abdestilliert wird.

c) Die vorstehend unter b) beschriebene Arbeitsweise wird wiederholt mit der Abänderung, dass 4 Teile Ethoxypolysiloxan mit einem $SiO_2$-Gehalt von etwa 34% anstelle von 2 Teilen Tetraethylsilikat eingesetzt werden.

Das in einigen Beispielen verwendete Organopolysiloxan mit über Kohlenstoff an Silicium gebundenen Aminogruppen besteht gemäss dem NMR-Spektrum aus 16,4 Molprozent $CH_3O$-Gruppen, 71 Molprozent Dimethylsiloxaneinheiten und 12,6 Molprozent Gruppierungen der Formel

$$H_2N(CH_2)_2NH(CH_2)_3\overset{|}{\underset{|}{S}}iO.$$

Es ist durch Umsetzung des Silans der Formel

$$H_2N(CH_2)_2NH(CH_2)_3Si(OCH_3)_3$$

mit einem in den endständigen Einheiten je eine Si-gebundene Hydroxylgruppe aufweisendem Dimethylpolysiloxan mit einer Viskosität von 80 mPa·s, gemessen bei 25 °C, hergestellt worden.

Beispiel 1

40 Teile eines in den endständigen Einheiten je eine Si-gebundene Hydroxylgruppe aufweisenden Dimethylpolysiloxans mit einer Viskosität von 300 000 mPa·s bei 25 °C werden in der angegebenen Reihenfolge mit 20 Teilen eines in den endständigen Einheiten je eine Si-gebundene Hydroxylgruppe aufweisenden Dimethylpolysiloxans mit einer Viskosität von 20 000 mPa·s bei 25 °C, 40 Teilen eines durch Trimethylsiloxygruppen endblockierten Dimethylpolysiloxans mit einer Viskosität von 100 mPa·s bei 25 °C, 2 Teilen Tri-n-butylphenolpolyethylenglykolether mit 13 Ethylenoxyd-Einheiten und 1 Teil des oben näher beschriebenen Organopolysiloxans mit über Kohlenstoff an Silicium gebundenen Aminogruppen vermischt. In dieses Gemisch werden 10 Teile Methyltris-(methylethylketoxim)-silan eingerührt. Die so erhaltene Mischung wird mit 80 Teilen Calciumcarbonat, dessen Oberfläche mit Stearinsäure überzogen ist («gecoatete Kreide»), 10 Teilen pyrogen in der Gasphase erzeugten Siliciumdioxyd (englisch: fume silica) mit einer Oberfläche von 150 $m^2/g$ und 2 Teilen des Umsetzungsproduktes, dessen Herstellung oben unter a) beschrieben wurde, vermischt.

Die so erhaltene, durch Evakuieren von Lufteinschlüssen befreite, unter Ausschluss von Wasser lagerfähige, bei Zutritt von Wasser bei Raumtemperatur zu einem Elastomeren vernetzende Masse ist homogen, geschmeidig weich und standfest, sowohl bei 5 °C als auch bei 70 °C, d.h. sie läuft bei diesen Temperaturen aus einer senkrechten Fuge vor der Vernetzung nicht aus.

Zur Prüfung auf Frühbeanspruchbarkeit, d.h. zum Beweis der Tatsache, dass die Masse ein Elastomer ergibt, das bereits bei Beginn der Vernetzung gedehnt werden kann, ohne dass sich Risse in der zunächst gebildeten Haut oder in dem unter dieser Haut vorhandenen, noch nicht vernetzte Teil der Masse bilden, wird eine Probe der Masse nach 3 Monaten Lagerung in einem verschlossenen Gefäss bei Raumtemperatur zwischen zwei senkrecht und parallel in einem Abstand von 11 mm auf einer Polyethylenfolie angeordnete Aluminiumplatten mit den Abmessungen 100 mm × 10 mm eingefüllt und der Luftfeuchtigkeit ausgesetzt. Dann wird der Abstand der Aluminiumplatten auf 12,6 mm, d.h. um 14,6% des ursprünglichen Abstands, jeweils innerhalb von 5 Stunden unmittelbar nach dem Einfüllen der Mischung in die Fuge bzw. nach 2 Stunden Lagerung der gefüllten Anordnung bei 50 °C in einem Umlufttrokkenschrank vergrössert. Dabei bilden sich weder an der Oberfläche noch im Inneren der Füllung des Raumes zwischen den Aluminiumplatten Risse oder andere Hohlräume.

Beispiel 2

Die in Beispiel 1 beschriebene Arbeitsweise wird wiederholt mit der Abänderung, dass 1 Teil des Umsetzungsprodukts, dessen Herstellung oben unter b) beschrieben wurde, anstelle der 2 Teile des Umsetzungsprodukts, dessen Herstellung oben unter a) beschrieben wurde, eingesetzt werden.

Bei der Prüfung auf Frühbeanspruchbarkeit wird sowohl nach dem Dehnen, das unmittelbar nach dem Einfüllen der Masse in den Raum zwischen den Aluminiumplatten erfolgt, als auch nach dem Dehnen, das nach 2 Stunden Lagerung der gefüllten Anordung bei 50 °C im Trockenschrank erfolgt, das gleiche Ergebnis wie bei Beispiel 1 erhalten.

Vergleichsversuch V 1

Die in Beispiel 1 beschriebene Arbeitsweise wird wiederholt mit der Abänderung, dass keinerlei Zinnverbindung mitverwendet wird.

Bei der Prüfung auf Frühbeanspruchbarkeit bilden sich sowohl bei dem Dehnen, das unmittelbar nach dem Einfüllen der Masse erfolgt, als auch bei dem Dehnen, das nach 2 Stunden Lagerung der gefüllten Anordnung bei 50 °C im Trockenschrank erfolgt, mehrere Risse in der Oberfläche der Füllung des Raumes zwischen den Platten.

Beispiel 3

55 Teile eines in den endständigen Einheiten je eine Si-gebundene Hydroxylgruppe aufweisenden Dimethylpolysiloxans mit einer Viskosität von 80 000 mPa·s bei 25 °C werden in der angegebenen Reihenfolge mit 35 Teilen eines durch Trimethylsiloxygruppen endblockierten Dimethylpolysiloxans mit einer Viskosität von 100 mPa·s bei 25 °C, 6 Teilen eines Gemisches aus gleichen Teilen Methyltris-(methylethylketoxim)-silan und Methyltris-(cyclohexylamino)-silan, 2 Teilen des unmittelbar vor Beispiel 1 näher beschriebenen Organopolysiloxans mit über Kohlenstoff an Silicium gebundenen Aminogruppen und 11 Teilen pyrogen in der Gasphase erzeugten Siliciumdioxyd mit einer Oberfläche von 150 $m^2/g$ vermischt. In die so erhaltene Mischung werden 0,3 Teile des Umsetzungsprodukts, dessen Herstellung oben unter c) beschrieben wurde, eingemischt.

Die Prüfung auf Frühbeanspruchbarkeit erfolgt nach 3 Monaten Lagerung der Masse bei Raumtemperatur in einem verschlossenen Gefäss wie in Beispiel 1 beschrieben. Es sind sowohl nach dem Dehnen, das unmittelbar nach dem Einfüllen der Masse in den Raum zwischen den Aluminiumplatten erfolgt, als auch nach dem Dehnen, das nach 2 Stunden Lagerung der gefüllten Anordnung im Trockenschrank erfolgt, weder an der Oberfläche noch im Inneren der Füllung des Raums zwischen den Aluminiumplatten Risse oder andere Hohlräume zu beobachten.

Vergleichsversuch V 2

Die in Beispiel 3 beschriebene Arbeitsweise wird wiederholt mit der Abänderung, dass keinerlei Zinnverbindung mitverwendet wird.

Bei der Prüfung auf Frühbeanspruchbarkeit bilden sich sowohl bei dem Dehnen, das unmittelbar nach dem Einfüllen der Masse in den Raum zwischen den Aluminiumplatten erfolgt, als auch nach dem Dehnen, das nach 2 Stunden Lagerung der gefüllten Anordnung bei 50 °C im Trockenschrank erfolgt, mehrere Risse in der Oberfläche der Füllung des Raumes zwischen den Platten.

Beispiel 4

20 Teile des in den endständigen Einheiten je eine Si-gebundene Hydroxylgruppe aufweisenden Dimethylpolysiloxans mit einer Viskosität von 300 000 mPa·s bei 25 °C werden in der angegebenen Reihenfolge mit 7 Teilen des in den endständigen Einheiten je eine Si-gebundene Hydroxylgruppe aufweisenden Dimethylpolysiloxans mit einer Viskosität von 20 000 mPa·s bei 25 °C, 20 Teilen eines durch Trimethylsiloxygruppen endblockierten Dimethylpolysiloxans mit einer Viskosität von 1000 mPa·s bei 25 °C, 2 Teilen Tri-n-butylphenolpolyethylenglykolether mit 13 Ethylenoxyd-Einheiten, 0,6 Teilen des Silans der Formel

$$H_2N(CH_2)_2NH(CH_2)_3Si(OCH_3)_3$$

und 7 Teilen eines Gemisches aus 3 Teilen Methyltris-(methylethylketoxim)-silan, 2 Teilen Methyltris-(cyclohexylamino)-silan und 1 Teil Dimethylbis-(cyclohexylamino)-silan vermischt. In dieses Gemisch werden in der angegebenen Reihenfolge 45 Teile Calciumcarbonat, dessen Oberfläche mit Stearinsäure überzogen ist, 4 Teile pyrogen in der Gasphase erzeugtes Siliciumdioxyd mit einer Oberfläche von 150 $m^2/g$ und 0,33 Teile des Umsetzungsprodukts, dessen Herstellung oben unter a) beschrieben wurde, eingemischt.

Die so erhaltene, durch Evakuieren von Lufteinschlüssen befreite, unter Ausschluss von Wasser lagerfähige, bei Zutritt von Wasser bei Raumtemperatur zu einem Elastomeren vernetzende Masse ist homogen, geschmeidig weich und standfest. Sie wird in Tuben abgefüllt, die verschlossen und 24 Stunden bei Raumtemperatur gelagert werden. Dann werden den Tuben Proben entnommen. Diese Proben werden auf die in Tabelle I angegebenen, vorher mit Lösungsmittel gereinigten Unterlagen strangförmig aufgetragen und insgesamt 1 Woche bei 23 °C und 50% relativer Luftfeuchtigkeit vernetzen und lagern gelassen. Dann wird die Haftfestigkeit der Elastomeren durch mechanisches Abziehen von der Unterlage geprüft.

Die Ergebnisse sind in Tabelle I angegeben.

Tabelle I

| Unterlage | Haftung |
|---|---|
| Aluminium | + |
| anodisch oxydiertes Aluminium | + |
| Beton | + |
| Asbestzement | + |
| Hart-Polyvinylchlorid | ∅ |
| Polyacrylat | + |
| Polycarbonat | + |

+ = gute Haftung = Kohäsionsriss = Riss im Elastomeren

∅ = Teilhaftung = Adhäsionsriss und Kohäsionsriss = Trennung zwischen Elastomer und Unterlage und Riss im Elastomer.

Weiterhin werden Proben aus den Tuben in 2 ± 0,1 mm dicken Schichten auf einer glatten Unterlage bei 23 °C und 50% relativer Luftfeuchtigkeit insgesamt 4 Wochen vernetzen und lagern gelassen. Dann werden Spannungswert bei 100% Dehnung, Zugfestigkeit und Rissdehnung nach DIN (Deutsche Industrie Norm) 53 504 mit Normstab S3A sowie die Shore-A-Härte nach DIN 53 505 der Elastomeren bestimmt. Die Ergebnisse dieser Prüfung sowie von Wiederholungen dieser Prüfungen nach Lagerung der Elastomeren bei erhöhter Temperatur und höherer Luftfeuchtigkeit sind in Tabelle II angegeben.

Beispiel 5

40 Teile des in den endständigen Einheiten je eine Si-gebundene Hydroxylgruppe aufweisenden Dimethylpolysiloxans mit einer Viskosität von 300 000 mPa·s bei 25 °C werden in der angegebenen Reihenfolge mit 15 Teilen des in den endständigen Einheiten je eine Si-gebundene Hydroxylgruppe aufweisenden Dimethylpolysiloxans mit einer Viskosität von 20 000 mPa·s bei 25 °C und 35 Teilen des durch Trimethylsiloxygruppen endblockierten Dimethylpolysiloxans mit einer Viskosität von 100 mPa·s bei 25 °C, 6 Teilen Methyltris-(methylketoxim)-silan und 2 Teilen des unmittelbar vor Beispiel 1 näher beschriebenen Organopolysiloxans mit über Kohlenstoff an Silicium gebundenen Aminogruppen vermischt. In dieses Gemisch werden zunächst 11 Teile pyrogen in der Gasphase erzeugtes Siliciumdioxyd mit einer Oberfläche von 150 $m^2/g$ und dann 0,8 Teile des Umsetzungsprodukts, dessen Herstellung oben unter a) beschrieben wurde, eingemischt.

Die so erhaltene, durch Evakuieren von Lufteinschlüssen befreite, unter Ausschluss von Wasser lagerfähige, bei Zutritt von Wasser bei Raumtemperatur zu einem Elastomeren vernetzende Masse ist homogen, geschmeidig weich und standfest. Sie wird in Tuben abgefüllt und nach 24 Stunden Lagerung der verschlossenen Tuben bei Raumtemperatur werden bei Proben des Inhalts der Tuben, wie in Beispiel 4 angegeben, Spannungswert bei 100% Dehnung, Zugfestigkeit, Reissdehnung und Shore-A-Härte der aus den Proben gebildeten Elastomeren geprüft. Die Ergebnisse sind ebenfalls in Tabelle II angegeben.

Tabelle II

| | Beispiel 4 | | | Beispiel 5 | | |
|---|---|---|---|---|---|---|
| | +) | ++) | +++) | +) | ++) | +++) |
| Spannungswert bei 100% $N/mm^2$ | 0,49 | 0,19 | 0,34 | 0,31 | 0,23 | 0,27 |
| Zugfestigkeit $N/mm^2$ | 0,96 | 0,52 | 0,44 | 1,20 | 0,80 | 0,50 |
| Reissdehnung % | 460 | 395 | 350 | 510 | 600 | 340 |
| Shore-A-Härte | 23 | 15 | 17 | 18 | 9 | 19 |

+) nach Vernetzung und Lagerung wie in Beispiel 4 angegeben

++) nach Vernetzung und Lagerung wie in Beispiel 4 angegeben und anschliessend 2 Wochen Lagerung bei 70 °C und 100% relativer Luftfeuchtigkeit

+++) nach Vernetzung und Lagerung wie in Beispiel 4 angegeben und anschliessend 8 Wochen Lagerung bei 70 °C und 100% relativer Luftfeuchtigkeit

Vergleichsversuch V 3

Die in Beispiel 4 beschriebene Arbeitsweise wird wiederholt, mit der Abänderung, dass anstelle der 0,33 Teile des Umsetzungsprodukts, dessen Herstellung oben unter a) beschrieben wurde, eine Lösung von 0,33 Teilen der Verbindung der Formel

$$Si[OSn(n\text{-}C_4H_9)_2OOCH_3]_4$$

in 0,33 Teilen Petrolether verwendet wird.

Nach Vernetzung und Lagerung wie in Beispiel 4 angegeben und anschliessend 8 Wochen Lagerung bei 70 °C und 100% relativer Luftfeuchtigkeit sind die Elastomeren so stark versprödet, dass keinerlei Messungen von Spannungswert bei 100% Dehnung, Zugfestigkeit, Reissdehnung und Shore-A-Härte möglich sind.

Vergleichsversuch V 4

Die in Beispiel 5 beschriebene Arbeitsweise wird wiederholt, mit der Abänderung, dass anstelle der 0,8 Teile des Umsetzungsprodukts, dessen Herstellung oben unter a) beschrieben wurde, eine Lösung von 0,8 Teilen der Verbindung der Formel

$$Si[OSn(n\text{-}C_4H_9)_2OOCH_3]_4$$

in 0,8 Teilen Petrolether verwendet wird.

Nach Vernetzung und Lagerung wie in Beispiel 4 angegeben und anschliessend 8 Wochen Lagerung bei 70 °C und 100% relativer Luftfeuchtigkeit wird das gleiche Ergebnis wie bei Vergleichsversuch V 3 erhalten.

## Patentansprüche

1. Unter Ausschluss von Wasser lagerfähige, bei Zutritt von Wasser bei Raumtemperatur zu Elastomeren vernetzende Massen, die durch Vermischen von kondensationsfähige Endgruppen aufweisendem Diorganopolysiloxan mit mindestens drei über Stickstoff an Silicium gebundene Aminogruppen oder über Sauerstoff an Silicium gebundene Oximgruppen oder insgesamt mindestens drei über Stickstoff an Silicium gebundene Aminogruppen und über Sauerstoff an Silicium gebundene Oximgruppen je Molekül aufweisender Siliciumverbindung und Umsetzungsprodukt von mindestens zwei über Sauerstoff an Silicium gebundene, gegebenenfalls durch Ethersauerstoff unterbrochene, einwertige Kohlenwasserstoffreste je Molekül als hydrolysierbare Gruppen aufweisendem Silan oder dessen Oligomer mit Diorganozinndiacylat als wesentlichen Stoffen hergestellt worden sind, dadurch gekennzeichnet, dass sie als Umsetzungsprodukt der vorstehend definierten Art solches enthalten, bei dem alle Valenzen der Zinnatome durch SnC-gebundene, einwertige organische Reste bzw. durch Sauerstoffatome der Gruppierung

$$\equiv SiOSn \equiv$$

abgesättigt sind.

2. Massen nach Anspruch 1, dadurch gekennzeichnet, dass als Umsetzungsprodukt solches enthalten ist, das durch 15 Minuten bis 15 Stunden währendes Erwärmen von mindestens zwei über Sauerstoff an Silicium gebundene Kohlenwasserstoffreste je Molekül als hydrolysierbare

Gruppen aufweisendem Silan oder dessen Oligomer im Gemisch mit Diorganozinndiacylat in Mengen von 4 bis 25 Grammäquivalent über Sauerstoff an Silicium gebundenem Kohlenwasserstoffrest je Mol Diorganozinndiacylat auf 15 bis 200 °C bei höchstens 1 bar hergestellt wurde.

**Revendications**

1. Compositions pouvant être stockées à l'abri de l'humidité et qui se réticulent en élastomères à la température ordinaire en présence d'eau, compositions que l'on prépare en mélangeant, comme matières essèntielles, un polydiorganosiloxane à groupes terminaux susceptibles de condensation avec un composé du silicium ayant par molécule au moins trois groupes amino liés à du silicium par l'atome d'azote ou groupes oximes liés au silicium par l'oxygène ou bien au total trois groupes amino liés au silicium per l'azote et groupes oximes liés au silicium par l'oxygène, et le produit de réaction d'un silane ou de son oligomère ayant par molécule, comme groupes hydrolysables, au moins deux radicaux hydrocarbonés monovalents liés à du silicium par de l'oxygène et pouvant être interrompus par de l'oxygène en groupe éther, avec un diacylate diorganostannique, compositions caractérisées en ce que le produit de réaction ci-dessus est un produit dont toutes les valences des atomes d'étain sont satisfaites par des radicaux organiques monovalents à liaison SnC ou par des atomes d'oxygène du groupe

$$\equiv SiOSn \equiv$$

2. Compositions selon la revendication 1, caractérisées en ce qu'elles contiennent comme produit de réaction un produit qui a été obtenu par un chauffage de 15 minutes à 15 heures entre 15 et 200 °C, sous une pression maximale de 1 bar, d'un silane ou de son oligomère ayant comme groupes hydrolisables au moins deux radicaux hydrocarbonés par molécule liés à du silicium par un atome d'oxygène, en mélange avec un diacylate diorganostannique dans des proportions de 4 à 25 équivalents-gramme de radicaux hydrocarbonés liés au silicium par l'oxygène, par mole du diacylate diorganostannique.

**Claims**

1. Compositions that are storable in the absence of water and that crosslink to form elastomers in the presence of water at room temperature which have been manufactured by mixing a diorganopolysiloxane having condensable terminal groups with a silicon compound having, per molecule, at least three amino groups bonded to silicon via nitrogen or oxime groups bonded to silicon via oxygen or, in total, at least three amino groups bonded to silicon via nitrogen and oxime groups bonded to silicon via oxygen and with a reaction product of a silane having, as hydrolysable groups, at least two monovalent hydrocarbon radicals per molecule bonded to silicon via oxygen and optionally interrupted by ether oxygen, or an oligomer thereof, and a diorganotin diacylate, as essential substances, characterised in that they contain, as the reaction product of the type defined above, one in which all the valencies of the tin atoms are satisfied by SnC-bonded monovalent organic radicals or by oxygen atoms of the grouping

$$\equiv SiOSn \equiv.$$

2. Compositions according to claim 1, characterised in that there is contained, as reaction product, one which has been manufactured by heating a silane having, as hydrolysable groups, at least two hydrocarbon radicals per molecule bonded to silicon via oxygen, or an oligomer thereof, in mixture with a diorganotin diacylate in amounts of from 4 to 25 gram equivalents of the hydrocarbon radical bonded to silicon via oxygen per mole of diorganotin diacylate for from 15 minutes to 15 hours at from 15 to 200 °C at, at most, 1 bar.